# EUROPÄISCHE PATENTSCHRIFT

(11) **EP 3 984 118 B1**
(45) Veröffentlichungstag und Bekanntmachung des Hinweises auf die Patenterteilung: **08.04.2026**
(21) Anmeldenummer: 20732864.2
(22) Anmeldetag: 12.06.2020
(51) Int. Cl.: H02K 7/116, A47C 20/04, F16H 25/20, H02K 11/01, H02K 11/026, H02K 5/10, H02K 11/00

(54) **ENTSTÖRTER LINEARANTRIEB**
INTERFERENCE-SUPPRESSED LINEAR DRIVE
ENTRAÎNEMENT LINÉAIRE ANTIPARASITÉ

(30) Priorität: 14.06.2019 DE 202019103356 U; 17.12.2019 DE 102019134742
(43) Veröffentlichungstag der Anmeldung: 20.04.2022
(73) Patentinhaber: DewertOkin KFT, 6000 Kecskemét (HU)
(72) Erfinder: PORDE, Christoph, 6000 Kecskemé (HU); BARTUS, Péter, 6066 Tiszaalpár (HU); KÁSA, Attila, 6044 Kecskemét (HU)
(74) Vertreter: Lippert Stachow Patentanwälte Rechtsanwälte
(86) Internationale Anmeldenummer: PCT/EP2020/066312
(87) Internationale Veröffentlichungsnummer: WO 2020/249735

(56) Entgegenhaltungen:
- EP-A1- 0 075 777
- EP-A1- 0 618 659
- EP-A1- 3 343 056
- DE-A1- 102010 062 727
- DE-A1- 102011 055 337
- DE-A1- 3 513 155
- DE-U1- 20 108 888
- US-A1- 2002 149 283
- US-A1- 2013 285 494

## Beschreibung

Die Erfindung betrifft ein Lineargetriebe mit einem teilbaren Getriebegehäuse, einem mit dem Getriebegehäuse verbundenen und in einem Motorgehäuse aufgenommenen und entstörten Elektromotor, der über einen in dem Motorgehäuse aufgenommenen Rotor eine Welle antreibt, die auf einem hinteren Wellende in einem hinteren Wellenlager gelagert ist und auf einem vorderen Wellenende gelagert ist. Die Stromübertragung auf den Rotor erfolgt über einen Kommutator und die Welle treibt eine Schnecke an, welche ihrerseits ein Schneckenrad kämmt, das seinerseits drehfest mit einer Spindel verbunden ist, auf der eine Spindelmutter läuft, die drehfest und axial verstellbar in einem Führungsrohr gehalten ist und entlang dessen Längsachse verstellbar ist. Die Spindelmutter ist mit einem Hubrohr verbunden.

Ein derartiger Linearantrieb wird vorzugsweise verwendet für das automatische Verstellen von beweglich gelagerten Teilen von Liege- und Sitzmöbeln, also Möbelstücken.

Aus der WO 2013/068329 der Anmelderin ist ein gattungsgemäßer Linearantrieb bekannt. Weitere Stand der Technik ist bekannt aus CN 204 538 891 U, WO 2019/091 997 A1, WO 2013 068 329 A1, US 2103/0 285 494 A1, DE 20 2016 104 185 U1, DE 196 58 233 A1, DE 10 2009 027 370 A1, DE 10 2011 055 337 A1, DE 10 2010 102 790 A1, DE 90 13 006 U1, DE 201 08 888 U1 sowie DE 20 2012 000 412 U1.

Bei derartigen Linearantrieben ist der entstörte Elektromotor als geschlossene Einheit aufgebaut, welche ein topfförmiges Motorgehäuse umfasst, im den der auf der Welle sitzende Rotor des Elektromotors und die elektrischen Komponenten für den Betrieb des Elektromotors aufgenommen sind, z.B. Platinen, der Kommutator, die Bürsten zur Stromversorgung des Kommutators, Dioden, Hallsensoren zur Wegmessung, Kondensatoren und Spulen zur Entstörung des Motors sowie die entsprechenden Leitungen. Frontseitig verschlossen wird das topfförmig und geschlossen ausgebildete Motorgehäuse durch eine häufig auch als Lagerschild bezeichnete Metallplatte, durch welche die angetriebene Motorwelle aus dem Motorgehäuse hinausragt. Dieses Lagerschild ist mit dem vorzugsweise aus Stahl gefertigten Motorgehäuse üblicherweise verkrimpt oder in anderer Weise formschlüssig befestigt und weist auf der Vorderseite üblicherweise Löcher zur Befestigung an dem Getriebegehäuse auf.

US 2002/149283 A1 beschreibt einen Linearantrieb mit einem Getriebegehäuse und eine Entstörungsplatine.

Die EP 75777 A1 beschreibt einen Getriebemotor mit Motorgehäuse und Getriebe-Schnecken-Anordnung.

Die DE 3513155 A1 beschreibt einen Antriebsmotor für ein Gerät wie eine Waschmaschine, wobei der Motor eine Leiterplatte aufweist, welche als Träger für Entstörbauelemente dienen kann.

### Nachteile am Stand der Technik

Ein Linearantrieb bzw. -getriebe aus dem Stand der Technik weist üblicherweise die folgenden "Elektronikkomponenten" auf, die auf getrennten Platinen angeordnet sind und die einzeln verbaut und angeschlossen bzw. verdrahtet werden müssen:
- Anschluss zur geordneten Verteilung (Diese kann aus Kostengründen ohne Platine und als "wilde Verdrahtung" ausgebildet sein; Üblicherweise ist dann auch ein steckbares Motorkabel vorgesehen, um den Antrieb mit der Steuerung verbinden zu können.)
- Bürstenträger zur Kontaktierung bzw. Stromversorgung des Kommutators.
- Endschalter (Üblicherweise sind auf einer Trägerleiste zwei voneinander beabstandete Endlagenschalter mit einer zugehörenden Diode und Anschlussleitungen angeordnet.
- Hallsensor nur bei solchen Antrieben, bei denen die Weginformation erfasst werden soll.

Diese einzelnen Platinen und evtl. weitere Platinen sind separat im Motorgehäuse verbaut. Die Montage und der Verbau der einzelnen Komponenten in dem beengten Bauraum des Motorengehäuses mit dem rotierenden Rotor und dem sich drehenden Kommutator mit der gesamten Verkabelung ist relativ kompliziert und aufwendig seitens der Montage. Auch ist der Bauraum durch die Vorgabe des Motorgehäuses beschränkt. Müssen Leitungen an dem Bürstenträger bzw. den Bürsten vorbeigeführt werden, ist dieses besonders kritisch, wenn die Leitungen mit den rotierenden Teilen in Kontakt kommen würden und teilweise beschädigt werden könnten. Beim Stand der Technik sind üblicherweise mehrere getrennte Platinen vorgesehen, die getrennt innerhalb des Motorgehäuses verbaut und miteinander über Leitungen verbunden werden müssen, so z.B. der Bürstenträger für den Anschluss mit dem Kommutator, eine Platine für das Auswerten der Signale der Endschalter, welche üblicherweise die Lage und den Spielraum der Spindelmutter begrenzen, eine Platine mit Hallsensoren zum Erfassen der Drehbewegung des Rotors, sowie die Entstörungsplatine, auf welcher die elektrischen und/oder elektronischen Komponenten zur Reduzierung der Funkstörungen bereits an der Quelle angeordnet sind, z.B. durch Verschleifung des Stromanstiegs bei Schaltvorgängen durch Vorwiderstände, Kondensatoren und Drosseln.

Häufig ist zudem noch eine extern und separat angeordnete Relaisplatine mit mindestens einem Relais vorgesehen, mit welcher der stärkere Motorstrom über die Endschalter zur Begrenzung des Verstellwegs der Spindelmutter steuerbar ist.

### Technisches Problem / Aufgabe

Ausgehend von dem eingangs genannten Stand der Technik und der damit verbundenen Nachteile liegt der Erfindung das technische Probleme / die Aufgabe zugrunde, einen gattungsgemäßen Linearantrieb vorzusehen, welcher die eingangs genannten Nachteile zumindest teilweise vermeidet und insbesondere einfacher zu montieren ist und bei dem insofern eine geringere Fehleranfälligkeit bei der Montage besteht und somit geringerer Ausschuss auftritt.

### Erfindung

Dieses wird erfindungsgemäß bereits durch den unabhängigen Anspruch gelöst. Vorteilhafte, aber nicht zwingende Weiterentwicklungen sind in den Unteransprüchen wiedergegeben.

Erfindungsgemäß ist das hintere Wellenlager in dem Motorgehäuse gelagert und das vordere Wellenlager ist in dem Getriebegehäuse angeordnet bzw. gelagert. Ferner sind zumindest die zur Entstörung des Elektromotors erforderlichen elektrischen und/oder elektronischen Komponenten auf einer Entstörungsplatine angeordnet, die zwischen dem vorderen Wellenlager und dem Kommutator angeordnet ist, wobei die Entstörungsplatine in dem Getriebegehäuse angeordnet ist. Die elektrischen und/oder elektronischen Komponenten können insbesondere eine oder mehrere Drosseln und mindestens einen Kondensator umfassen.

Diese Entstörungsplatine ist erfindungsgemäß im Bereich zwischen dem Getriebe und dem Motor angeordnet, was bedeutet, dass das Motorgehäuse, welches vorzugsweise topfförmig ausgebildet ist, also am hinteren Ende geschlossen und vorderseitig offen ist, so dass die Entstörungsplatine außerhalb des Motorgehäuses angeordnet ist, also in das Getriebegehäuse verlagert ist, in dem naturgemäß wesentlich mehr Platz für die Montage und Verkabelung vorhanden ist, so dass die Montage schneller, einfacher und weniger fehleranfällig erfolgen kann. Darüber hinaus bietet diese Ausgestaltung den Vorteil, die vormals mehreren getrennten Platinen integriert auf der Entstörungsplatine anzuordnen, so dass nicht mehr mehrere getrennte Platinen verbaut und miteinander verdrahtet werden und auf korrekte Funktionsfähigkeit geprüft werden müssen, was die Fehleranfälligkeit weiter reduziert und die Montage erheblich vereinfacht. Erfindungsgemäß muss somit nur noch die Hauptverdrahtung im Bereich zwischen dem Schneckenrad und dem Kommutator angeordnet werden.

Entstört werden durch entsprechende Anordnung von Spulen und Kondensatoren sämtliche elektromagnetische Wellen, die verdrahtet und drahtlos auf umgebende elektrische Geräte Auswirkungen haben können.

Der Linearantrieb wird bevorzugt als Möbelantrieb eingesetzt, besonders bevorzugt zum Verstellen eines schwenkbaren Kopf- oder Fußteils eines Krankenbetts. Für den Fachmann ist verständlich, dass dieser allgemein zum Verstellen von mechanischen Einrichtungen aller Art einsetzbar ist, insbesondere zum Verstellen eines beweglichen Bauteils im Verhältnis zu einem stationären Bauteil.

Bevorzugt weist die Entstörungsplatine zudem alle erforderlichen Elektroanschlüsse auf.

Ferner weist die Entstörungsplatine bevorzugt alle Verdrahtungen in Form von Leiterbahnen auf, so dass alle elektronischen Komponenten aufgelötet oder aufgesteckt werden können. Die Entstörungsplatine umfasst vorzugsweise also den Anschluss zur geordneten Verteilung, den Bürstenträger, mindestens einen Endschalter sowie vorzugsweise einen oder mehrere Hallsensoren auf einer Platine.

Auch bei der erfindungsgemäßen Ausgestaltung umschließt das Motorgehäuse den rotierenden Rotor mit der angetriebenen Welle und nimmt bevorzugt die Permanentmagnete auf, welche den Rotor außenseitig in Einbaulage umgeben, so dass ein Elektromotor mit guter Effizienz, ruhiger Laufkultur und einem guten Wirkungsgrad bereitgestellt wird. Bevorzugt ist das Motorgehäuse als tiefgezogener Stahlkörper bzw. als Stahltopf ausgebildet. Das Getriebegehäuse ist vorzugsweise als Kunststoffspritzgussteil ausgebildet.

Bevorzugte Ausführungsformen umfassen die Befestigung der Entstörungsplatine an dem Getriebegehäuse. Erfindungsgemäß kann dieses nunmehr in dem gesamten Bereich zwischen dem Vorderende des Motorgehäuses und dem Anfang der Getriebeteile in dem Getriebe erfolgen, was den Einbau und die Verdrahtung erheblich vereinfacht.

Vorzugsweise umfasst die Entstörungsplatine einen Bürstenhalter und/oder einen Endschalter und/oder ein Relais und/oder einen Kabelstecker, die somit integral auf der Entstörungsplatine angeordnet sein können.

Im Gegensatz zum Stand der Technik ist das Motorgehäuse also grundsätzlich offen ausgebildet, was bedeutet, dass dieses kein vorderes Lagerschild umfasst, welches den Bauraum beschränkt. Somit können also Bereiche außerhalb des Motorgehäuses, aber innerhalb des Getriebegehäuses für das Anordnen von Bauteilen bzw. Komponenten eingesetzt werden. So ist das sonst in dem Lagerschild vorgesehene vordere Lager zur Lagerung der Welle in dem Getriebegehäuse angeordnet, was die Laufruhe der Welle deutlich verbessert.

Bei einer bevorzugten Weiterentwicklung umfasst das Getriebegehäuse eine Trennwand, welche das Getriebegehäuse in einen den Getriebebauteilen und mit Fett versehenen Getriebeabschnitt sowie einen dem Motorgehäuse zugewandten hinteren Abschnitt unterteilt, im welchem das Motorgehäuse in dem Getriebegehäuse angeordnet bzw. aufgenommen ist.

Bei der bevorzugten Ausführungsform umfasst diese Trennwand eine Durchgangsöffnung für die Welle und ist besonders bevorzugt mit einem Lagersitz versehen, in welche das vordere Wellenlager zur Lagerung der Welle einsetzbar ist. Eine bevorzugte Ausführungsform sieht ferner einen entsprechenden Sitz zur Aufnahme eines Dichtelements, insbesondere eines Radialwellendichtrings vor, welches in Einbaulage koaxial mit dem vorderen Wellenlager um die Welle angeordnet ist.

Das Motorgehäuse ist ferner zur Aufnahme des hinteren Lagers ausgebildet, was bevorzugt dadurch erfolgt, dass eine vorzugsweise zylindrische Lageraufnahme mit vorzugsweise reduziertem Durchmesser gegenüber dem Motorgehäuse vorgesehen ist, in welches das hintere Lager einsetzbar ist. Diese Lageraufnahme kann z.B. als eine verkleinerte zylindrische Ausstülpung an dem Motorgehäuse ausgebildet sein, die angepasst ist zur Aufnahme bzw. Lagerung des hinteren Lagers.

Somit ist die Welle des Elektromotors am in Einbaulage hinteren, mit dem Elektromotor versehenen Ende in dem Motorgehäuse gelagert und am vorderen, mit der Schnecke versehenen Ende in dem Getriebegehäuse, vorzugsweise in einer Trennwand des Getriebegehäuses.

Somit steht erfindungsgemäß der Bereich zwischen dem Kommutator und der vorderen Lagerstelle im Getriebegehäuse für die Anordnung der Entstörungsplatine und diesbezüglichen Verdrahtung zur Verfügung, welches auch besonders einfach erreichbar ist bei der Montage oder für die Wartung.

Wahlweise kann zudem ein Motortopf vorgesehen sein, also ein Bauteil, welches das Motorgehäuse nochmals außenseitig umschließt und welches an einem Befestigungsrand mit dem Getriebegehäuse verbindbar ist. Dieser Motortopf kann zur weiteren Abdichtung des Motorgehäuses vorgesehen sein, um insbesondere eine hohe IP-Zertifizierung bzw. Absicherung für eine spritzt- oder druckwasserdichte Ausbildung des Lineargetriebes bereitzustellen. Daneben kaschiert dieser Motortopf das Motorgehäuse außenseitig, so dass der Motortopf nicht als getrenntes, sondern als integrales Bauteil des Lineargetriebes wirkt bzw. angesehen wird.

Es ist aber auch ausreichend, wenn lediglich das Motorgehäuse mit dem Getriebegehäuse verbunden ist, was insbesondere dichtend erfolgt, um die gewünschte IP-Zertifizierung bzw. Abdichtung zu realisieren. Bevorzugt wird dieses dadurch realisiert, dass zwischen der äußeren Mantelfläche des Motorgehäuses und der inneren Mantelfläche des Getriebegehäuses ein Dichtmittel in Form von Silikon oder dergleichen vorgesehen ist, welches den Spalt bzw. Ringspalt zwischen den Fügepartnern permanent abdichtet. Oder anders ausgedrückt taucht das Motorgehäuse in das Getriebegehäuse dichtend ein ist also dichtend in dieses eingesetzt.

Zur Vergrößerung der Steifigkeit kann das Motorgehäuse einen radial nach außen verbreiternden Absatz aufweisen, der vorzugsweise im Bereich des vorderen Drittels des Motorgehäuses ausgebildet ist, so dass ein hinterer Motorgehäusebereich des Motorgehäuses mit einem geringeren Außendurchmesser und ein vorderer Motorgehäusebereich mit einem um vorzugsweise 10 bis 20 Prozent gegenüber dem hinteren Motorgehäusebereich vergrößerter vorderer Motorgehäusebereich gebildet wird. Bevorzugt taucht dieser vordere Motorgehäusebereich in das Getriebegehäuse ein bzw. ist mit diesem verbunden, vorzugsweise in dieses eingesetzt.

Bevorzugt umfasst die Entstörungsplatine ferner die Kohlebürsten zum Anschluss bzw. Betrieb an den Kommutator. Besonders bevorzugt sind diese Kohlebürsten bzw. Halter für die Kohlebürsten integral auf der Platine angeordnet, können aber auch als zusätzliches aufschnappbares Bauteil auf dieser befestigt werden.

Bevorzugt ist zudem mindestens ein Endschalter auf der Entstörungsplatine angeordnet. Bei der bevorzugten Ausführungsform ist dieser Endschalter auf der in Einbaulage vorderen Seite angeordnet und eine Stößelstange sitzt in diesem Endschalter mit einem hinteren Ende, wobei ein vorderes Ende in einer Aufnahmewand in dem Getriebegehäuse relativ verschieblich gelagert ist und besonders bevorzugt mit einer Gummikappe abgedeckt ist.

Ferner kann die Entstörungsplatine mindestens ein Relais umfassen, mit welchem der stärkere Motorstrom von etwa 6 Ampere für den Elektromotor über die Endschalter ansteuerbar ist.

Zur genauen Wegmessung der Welle bzw. des Rotors umfasst die Entstörungsplatine bei der bevorzugten Ausführungsform mindestens einen Hallsensor, bevorzugt zwei Hallsensoren, welche die Welle außenseitig bzw. radial umfänglich einfassen, also um eine Durchgangsöffnung für die Welle herum angeordnet sind. Anstelle der Hallsensoren können auch optische oder GMR-Sensoren eingesetzt werden.

Bei der bevorzugten Ausführungsform ist das Getriebegehäuse mehrteilig, insbesondere zweiteilig ausgebildet und umfasst vorzugsweise ein Gehäuseteil ausgebildet zur Verbindung mit dem Elektromotor, welches insbesondere einen Stutzen zur Aufnahme des Motorgehäuses aufweist, sowie einen Gehäusedeckel zum Verschließen des Getriebegehäuses.

Die Gehäuseteile sind für die Montage und Wartung bevorzugt trennbar ausgebildet. Bevorzugt liegen die Gehäuseteile an einer Trennungsebene gegeneinander an. Bei einer spritzwassergeschützten Ausführungsform ist an der Trennungsebene ein umlaufender Flansch mit einem daran ausgebildeten Dichtelement vorgesehen, welches vorzugsweise einer Dichtnut und einer komplementär dazu ausgebildeten Dichtlippe bzw. einem Dichtvorsprung umfasst, die in Einbaulage dichtend ineinander eingreifen und so die Fügestelle zwischen den Gehäuseteilen abdichtet.

Bei der bevorzugten Ausführungsform umfasst das durch den Elektromotor angetriebene Getriebe ein von der Schnecke angetriebenes Schneckenrad, das seinerseits drehfest mit einer Spindel verbindbar oder verbunden ist. Die Verbindung zwischen Schneckenrad und Spindel kann entweder direkt erfolgen oder aber, was bevorzugt zur Realisierung einer Notlösung ist, unter Zwischenschaltung einer Kupplung, welche das Schneckenrad lösbar verbindet mit einem die Spindel drehfest aufnehmenden Spindelhalter. Beispielsweise kann das Schneckenrad einen seitlichen Keilwellenstutzen umfassen und der Spindelhalter weist einen radial von einem zylindrischen Aufnahmestutzen für die Spindel herausragenden, komplementär ausgebildeten Keilwellenflansch mit einer korrespondierend ausgebildeten Keilwellen- oder einer Profilstruktur auf, die der Profilstruktur der Innenseite der Kupplung entspricht. In Ruhestellung verbindet die Kupplung somit das Schneckenrad mit dem Spindelhalter und lediglich für eine Notauslösung wird die Kupplung betätigt, was vorzugsweise dadurch erfolgt, dass die Kupplung durch eine Kupplungsbetätigung gegen eine zwischen dieser und dem Schneckenrad wirkenden Feder gezogen wird.

Bei der bevorzugten Ausführungsform läuft auf der Spindel eine mit dem Hubrohr verbundene Spindelmutter, die drehfest und axial verstellbar in dem Führungsrohr gehalten ist und entlang dessen Längsachse verstellbar ist.

Eine weitere Ausführungsform sieht die Integration einer Bremse in die Entstörungsplatine vor. Bei der bevorzugten Ausbildung sind die feststehenden Magnete an der Entstörungsplatine angeordnet. Diese können entweder direkt in dieser integriert oder in einer Magnethalterung angeordnet sein, die mit der Entstörungsplatine befestigbar ist.

Bei einer Weiterentwicklung kann die Entstörungsplatine auf der dem Motor abgewandten Seite ein Bluetooth-Modul umfassen, wobei dieses Modul auch auf einer getrennten Platine angeordnet sein kann, welche mit Lötpunkten an der Entstörungsplatine aufgelötet oder in anderer geeigneter Weise befestigt ist. Das Bluetooth-Modul kann auch in Form eines Chips direkt auf der Entstörungsplatine angeordnet, insbesondere verlötet sein.

Bei der bevorzugten Ausgestaltung ist für die Kommunikation des Prozessors mit anderen Komponenten ein Bussystem vorgesehen, insbesondere ein CAN-Bussystem. Alternativ kommt eine proprietäre Busstruktur nach Art eines 2-Draht differentiellen Busses zum Einsatz.

Zur Gewährleistung einer guten elektrischen Kontaktierung zur Verwirklichung einer möglichst guten elektrischen Abschirmung ist die Entstörungsplatine in dem Randbereich des aus Stahl gefertigten Motorgehäuses am äußeren Umfangsrand bevorzugt rund ausgebildet. Die Kontaktierung erfolgt vorzugsweise unmittelbar mit dem Gehäuse, alternativ über zwischenpositionierte Kontaktmittel.

Der Außendurchmesser der Platine entspricht in etwa dem Außendurchmesser des Stahlmantels des Motorgehäuses. Die Platine sitzt dabei erfindungsgemäß stirnseitig vor dem Motormantel, kontaktiert ihn und bildet zusammen mit dem Stahlmantel zwecks Abschirmung einen Faradayschen Käfig. Die Platine bildet damit einen Schirm gegen die EMV-Störungen im inneren des Motors.

Besonders bevorzugt ist diese ausgebildet zur Realisierung einer umfangsseitig vollflächigen, also voll-ringförmigen Kontaktierung. Alternativ sind zahlreiche Einzelkontakte vorgesehen, zumindest 5, besser noch mehr als 10.

Ferner weist die Entstörungsplatine in einer ersten und vereinfachten Ausführung Versorgungsanschlüsse auf, welche mittels eines Steckanschlusses durch eine Öffnung eines Gehäuseteils, des Getriebegehäuses oder des Motorgehäuses mit elektrischer Energie aus einer netzgebundenen Spannungsversorgung beaufschlagt werden. Es sind wenigstens zwei Versorgungsanschlüsse vorgesehen und bevorzugt führen die Versorgungsanschlüsse nur dann elektrische Energie, wenn der Elektromotor betrieben werden soll.

In einer weiteren Ausführung liegt an den Versorgungsanschlüssen eine Dauerspannung an und die Entstörungsplatine verfügt über entsprechende, wie eingangs genannte Relais- und/oder Halbleiterschalter, welche den Elektromotor in der gewünschten Drehrichtung ein- oder ausschalten oder bei Erreichen einer vorbestimmten Position der mit der Spindel gekoppelten Spindelmutter abschalten. Dazu kann noch ein Steuerkreis zum Betrieb der Relais- und/oder Halbleiterschalter vorgesehen sein, welcher ebenfalls auf der Entstörungsplatine angeordnet ist. In jedem Fall weist die Entstörungsplatine jedoch auch Motoranschlüsse auf, welche mit den Bürsten des Motors elektrisch leitend verbunden sind.

Wie eingangs näher beschrieben ist der Bürstenhalter beziehungsweise der Bürstenträger zur Halterung und Führung der Kohlebürsten ausgebildet, wobei die Bürsten selbst mittels Federspannung bei Betrieb des Elektromotors stets an den rotierenden Kollektor beziehungsweise Kommutator gedrückt werden. Die elektrische Verbindung der Bürsten zu den Motoranschlüssen kann durch die Feder selbst erfolgen, wenn diese aus einem elektrisch leitfähigen Material besteht. Die Feder selbst ist an dem Bürstenhalter befestigt und steht mit dem freien, dem der Bürste abgewandtem Ende, mit einem Motoranschluss der Entstörungsplatine in elektrischer Verbindung.

Alternativ ist die Bürste mit einer flexiblen Leitung versehen, welche mit dem korrespondierenden Motoranschluss verbunden ist. Sofern der Bürstenhalter aus einem elektrisch leitfähigen Material hergestellt ist, ist jede Bürste mit einem solchen ausgestattet, wobei jeder Bürstenhalter stoffschlüssig und elektrisch leitend mit dem jeweiligen korrespondierenden Motoranschluss verlötet ist.

In einer Ausführung, in welcher der Bürstenträger aus einem Kunststoff hergestellt ist, sind Entstörungsbausteine vorgesehen, die direkt mit dem Bürstenträger verbunden sind. Der Bürstenträger kann dabei z.B**.** elektrische Leiterbahnen aufweisen, welche fest und zumindest abschnittsweise an der Oberfläche des Bürstenträgers angeordnet sind. Diese Leiterbahnen sind dazu ausgebildet, mit elektrischen Bauteilen wie Entstörungsbauteilen bestehend aus Kondensatoren und/oder Spulen beziehungsweise Drosseln verlötet zu werden.

In einer anderen Ausführungsform stehen Abschnitte dieser jeweiligen Leiterbahnen mit dem Motoranschlüssen der Entstörungsplatine in elektrischer Verbindung. Die Verbindung ist bevorzugt als berührende Verbindung ausgebildet.

Bevorzugte ist die Entstörungsplatine doppelseitig mit Leiterbahnen versehen (Doppel-Layerplatine). Bei der bevorzugten Ausführungsform bilden alle Leiterbahnen oder eine vorbestimmte Auswahl, insbesondere dem Motor zugewandten Leiterbahnen (Signal- Steuer- und Masseleitungen) ein Netz zur Abschirmung, wobei die Maschenweite/der Abstand dieser Leiterbahnen zueinander geringer ist, als die Wellenlänge der zu vermeidenden elektromagnetischen Störwellen. Die zum Motorinneren zugewandten Leiterbahnen sind entweder Masseflächen oder weisen eine untergeordnete Funktion auf, welche über Entstörbausteine mit Masse verbunden sind. Die wichtigen Leiterbahnen mit der wichtigen und sensiblen Elektronik versehen sind, womit also kleine Signale übertragen werden, sowie auch die Bluetooth-Einheit, sind auf der vom Motor/Motorgehäuse abgewandten und somit dem Getriebe zugewandten Seite der Entstörungsplatine angeordnet.

Alternativ kann die Entstörungsplatine als eine Multilayer-Platine mit einer weiteren leiterbahnführenden Ebene ausgebildet sein, wobei eine Ebene/ein Layer die Abschirmung bildet und ein elektrisches Potential, z.B. das Massepotential bilden kann.

Eine alternative Ausführungsform sieht die Anordnung einer Elektronikkomponente in einem externen Steuergehäuse vor. Dabei kann es sich z.B. um das Bluetooth-Funkmodul handeln. Bei dieser Ausgestaltung ist der weitere Innenbereich des an den Motor angrenzenden Getriebegehäuses bevorzugt mit einer elektrisch leitfähigen Beschichtung zur Abschirmung versehen.

Losgelöst von dem erfindungsgemäßen Linearantrieb betrifft ein zur Erfindung nicht gehörendes Vergleichsbeispiel eine Baugruppe, umfassend ein Getriebegehäuse ausgebildet zur Aufnahme einer Entstörungsplatine und zur Anordnung eines Elektromotors, der ein in dem Getriebegehäuse angeordnetes Getriebe antreibt.

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen. Da Komponenten von Ausführungsformen in einer Anzahl verschiedener Orientierung positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

In der Figurenbeschreibung wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen, "und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc. Schließlich sind bei mehreren gleichen Bauteilen bzw. Elementen aus Gründen der Übersichtlichkeit nur jeweils eins mit einem Bezugszeichen versehen.

Es zeigen:

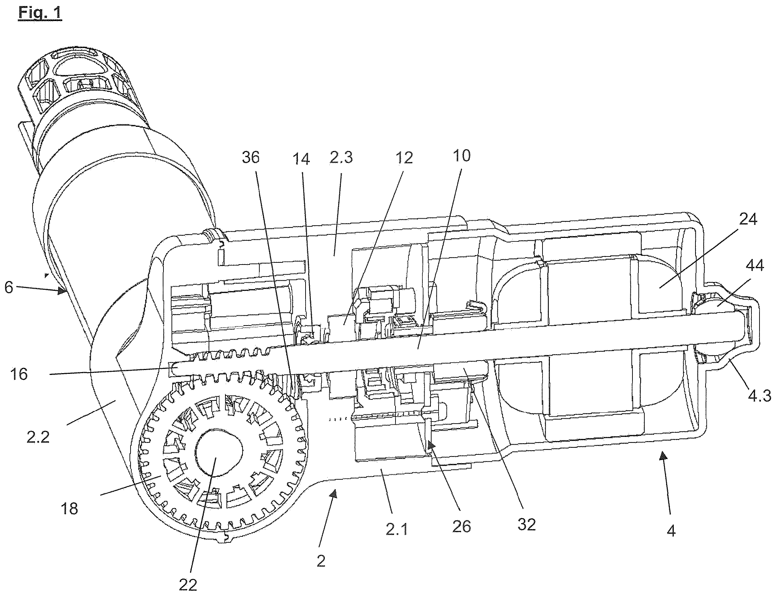

- Figur 1: einen perspektivischen Querschnitt durch das Getriebegehäuse eines erfindungsgemäßen Lineargetriebes;

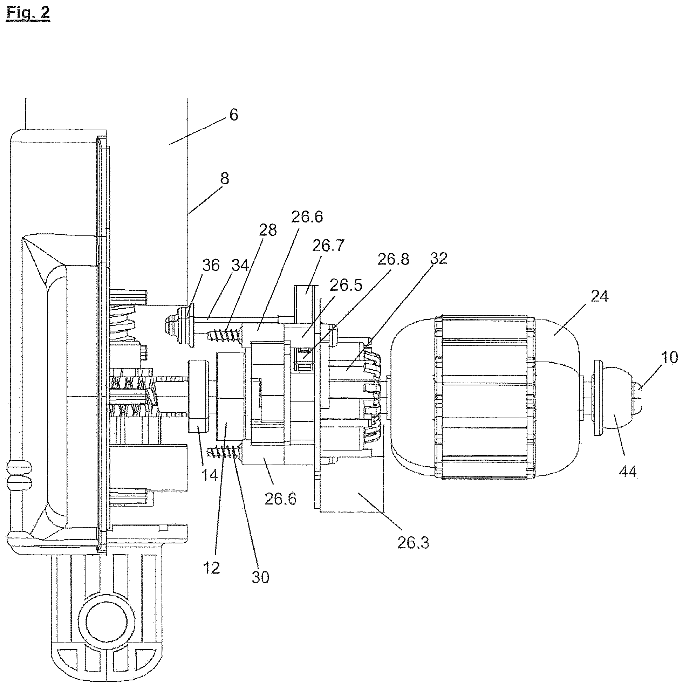

- Figur 2: eine Draufsicht des Lineargetriebes gemäß Figur 1 bei dem entfernten hinteren Gehäuseteil;
- Figur 3: einen perspektivischen Querschnitt einer alternativen Ausführungsform des erfindungsgemäßen Lineargetriebes durch das Getriebe- und das Motorgehäuse;
- Figur 4: eine vergrößerte perspektivische Frontansicht des Getriebegehäuses und der Zwischenwand des Getrie- begehäuses;

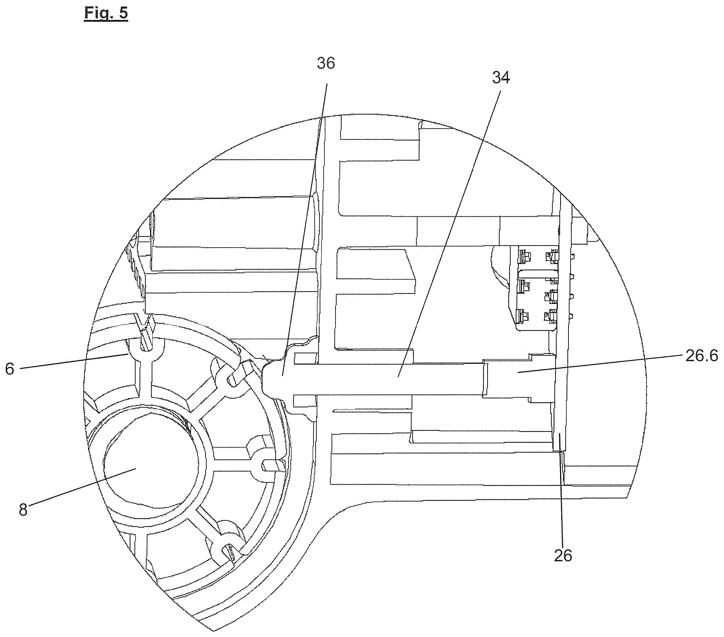

- Figur 5: einen vergrößerten Querschnitt im Detail zur Darstellung des Endschalters;
- Figur 6: eine vergrößerte perspektivische Detailansicht des Kabelanschlusses am Getriebegehäuse; und
- Figur 7: eine perspektivische Ansicht des Linearantriebs bei entferntem Motorgehäuse.

Demnach besteht der erfindungsgemäße Linearantrieb im Wesentlichen aus einem Getriebegehäuse 2, einen endseitig in dieses Getriebegehäuse 2 eingesetztes Motorgehäuse 4 sowie einem hohlzylindrischen Führungsrohr 6, in welchem eine Spindelmutter 8 längsverschieblich über den Linearantrieb verstellbar ist und welche ein Hubrohr 46 antreibt.

Das Getriebegehäuse 2 umfasst seinerseits zwei an einer Fügestelle zusammensetzbare Gehäuseteile, nämlich ein hinteres Gehäuseteil 2.1, welches ausgebildet ist zur Aufnahme des Motorgehäuses 4, sowie einem vorderen Gehäuseteil 2.2, welches das Getriebegehäuse 2 verschließt und gleichzeitig mit dem Getriebegehäuse 2 beidseitig das Führungsrohr 6 schalenförmig umfasst.

Das hintere Gehäuseteil 2.1 weist einen im Wesentlichen hohlzylindrischen Innenraum auf, der etwa in der Mitte der Gesamtlänge des hinteren Gehäuseteils 2.1 durch eine sich quer durch diesen Innenraum erstreckende Trennwand 2.3 unterteilt wird in einen dem Getriebe zugewandten, vorderen Getriebeabschnitt und einen hinteren, dem Motor zugewandten Motorabschnitt. Durch eine mittlere Durchgangsöffnung in dieser Trennwand 2.3 ragt eine von einem Elektromotor 25 angetriebene Welle 10 in den vorderen Getriebebereich. Die Welle 10 ist in dieser Trennwand 2.3 mittels eines vorderen Wellenlagers 12 gelagert, welches vorliegend als Wälzlager ausgebildet ist. Auf der dem Getrieberaum zugewandten Vorderseite der Trennwand 2.3 ist zur Abdichtung des Motorraums ferner ein Radialwellendichtring 14 eingesetzt. An dem vorderen Freiende der Welle 12 weist diese eine Schnecke 16 auf, welche das sich quer zur Längsachse der Welle 10 erstreckende Schneckenrad 18 kämmt. Dieses Schneckenrad 18 ist drehfest verbunden mit einem hohlzylindrischen Spindelhalter 20, in den seinerseits drehfest die Spindel 22 eingesetzt ist. Auf dieser Spindel 22 läuft schließlich die Spindelmutter 8, die somit durch Verstellung im Verhältnis zu dem stationären Führungsrohr 6 verstellbar ist zwischen einer durch einen vorderen Endschalter bestimmte Ausfahrposition sowie durch einen hinteren Endschalter bestimmte Einfahrposition.

Das Motorgehäuse 4 weist am hinteren Ende einen im Wesentlichen dom- bzw. stutzenförmig aus der hinteren Wand herausragenden Lagersitz 4.3 auf, in welchem ein hinteres Wellenlager 44 bündig einsetzbar ist, welches die Welle 10 am hinteren Wellenende in dem Motorgehäuse 4 lagert.

In Richtung des Elektromotors 24 ist in dem Motorabschnitt des Getriebegehäuses 2 die erfindungsgemäße Entstörungsplatine 26 angeordnet, und zwar befestigt über zwei Distanzschrauben 28, 30, die in die Trennwand 2.3 eingeschraubt sind.

In Richtung des Elektromotors 24 ist um bzw. auf der Welle 10 ein Kommutator 32 angeordnet und auf der dem Elektromotor 24 zugewandten Rückseite der Entstörungsplatine 26 sind zwei diametral gegenüberliegende Bürsten in entsprechenden Bürstenhaltern 26.1. 26.2 vorgesehen, die auf die Entstörungsplatine 26 aufgeschraubt sind. Auf dieser Rückseite der Entstörungsplatine ist ferner ein Relais 26.3 aufgesetzt, welches den Betriebsstrom des Elektromotors 24 durch die Endschalter schaltet.

Auf der Vorderseite weist die Entstörungsplatine 26 zwei Gewindebuchsen 26.4, 26.5 für die Aufnahme der Distanzschrauben 28, 30 auf. Ferner ist auf der Vorderseite der Entstörungsplatine 26 ein Endschalter 26.6 angeordnet, in welchem eine Stößelstange 34 eingreift, welche durch eine korrespondierende Öffnung in der Trennwand 2.3 hindurch in den Getriebeabschnitt des Getriebegehäuses 2 ragt und über eine Gummikappe 36 mediendicht abgedeckt ist. Diese Stößelstange 34 betätigt somit den hinteren Endschalter zur Begrenzung der Einfahrstrecke der Spindelmutter 8 in dem Führungsrohr 6.

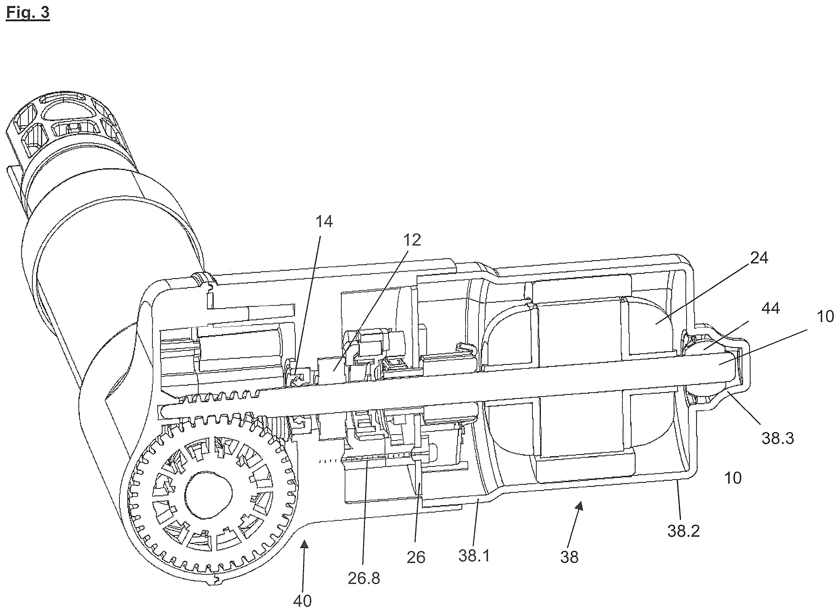

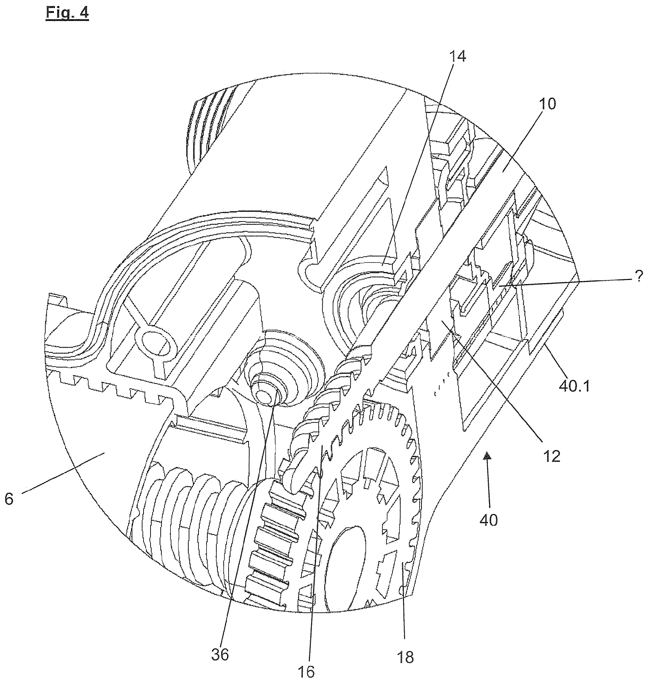

Die Figuren 3 und 4 zeigen ein alternativ ausgebildetes, erfindungsgemäßes Lineargetriebe. Bei diesem weist das Motorgehäuse 38 im vorderen Gehäusebereich, der in das Getriebegehäuse 40 eingesetzt ist, einen vorderen Motorgehäuseabschnitt 40.1 auf, der gegenüber einem länger ausgebildeten hinteren Motorgehäuseabschnitt 40.2 zur Steifigkeitserhöhung unter Bildung eines Absatzes radial nach außen verbreitert ist. Dieser vordere Motorgehäuseabschnitt 40.1 sitzt in Einbaulage in einem innenseitigen Innenabsatz 40.1 des Getriebegehäuses 40, an der auch die Entstörungsplatine 26 angeordnet ist.

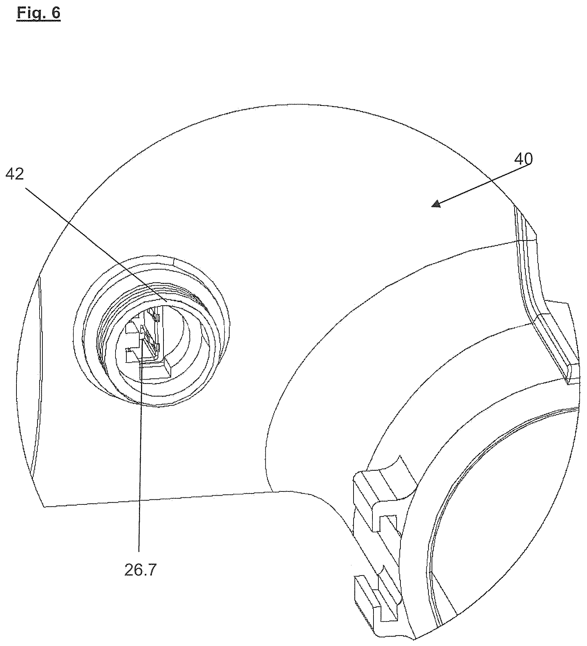

Ferner ist auf der Entstörungsplatine 26 ein Kabelstecker 26.7 angeordnet, der radial seitlich von der Entstörungsplatine 26 abragt und in Einbaulage in einem der Figur 6 vergrößert dargestellten zylindrischen Kabelstutzen 42 mit außenseitigem Befestigungsgewinde verdrehsicher einsteckbar ist. Mit dieser Ausgestaltung ist somit eine abgedichtete Verdrehsicherung des Kabelsteckers 26.7 in dem Getriebegehäuse 30 realisiert.

Wie bei der ersten Ausführungsform weist das Motorgehäuse 28 am hinteren Ende einen im Wesentlichen dom- bzw. stutzenförmig aus der hinteren Wand des Motorgehäuses 28 vorstehenden Lagereinsatz 38.3 auf, in welches ein hinteres Wellenlager 44 bündig einsetzbar ist und welches somit die Welle 10 am hinteren Ende in dem Motorgehäuse 28 lagert.

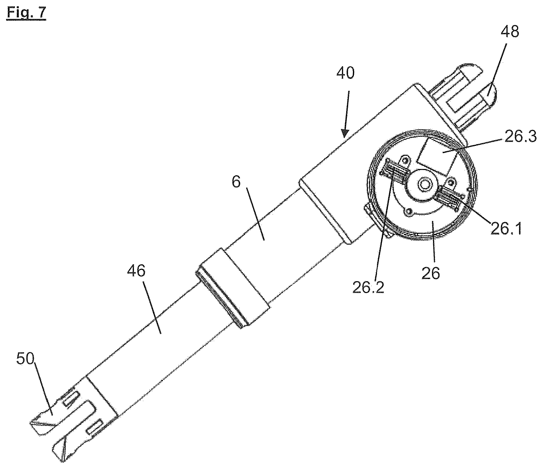

Figur 7 zeigt eine perspektivische Draufsicht des Linearantriebs bei entferntem Motorgehäuse 4 mit Blick auf die Entstörungsplatine 26, den darauf angeordneten Bürstenhaltern 26.1, 26.2 sowie dem Relais 26.3. Demnach umfasst der Linearantrieb am hinteren Ende ein in das Getriebegehäuse 40 eingesetzten hinteren Gabelkopf 50, welches in Figur 7 linksseitig angeordnet ist, und am vorderen Ende einen mit einem Hubrohr 46 verbunden vorderen Gabelkopf 50, über welchen der Linearantrieb zwischen zwei zu verstellende Bauteile einspannbar bzw. anordenbar ist. Dieses kann z.B. ein Krankenbett sein, welches mit dem hinteren Ende mit einer Querstrebe des Bettrahmens verbunden ist und mit dem vorderen Gabelkopf an einem gegenüber dem Rahmen zu verschwenkendes Fuß- oder Kopfteil des Bettes bzw. Rahmens.

### Entstörter Linearantrieb

### Bezugszeichenliste

- 2: Getriebegehäuse
- 2.1: hinteres Gehäuseteil
- 2.2: vorderes Gehäuseteil
- 2.3: Trennwand
- 4: Motorgehäuse
- 4.3: Lagereinsatz
- 6: Führungsrohr
- 8: Spindelmutter
- 10: Welle
- 12: vorderes Wellenlager
- 14: Radialwellendichtring
- 16: Schnecke
- 18: Schneckenrad
- 20: Spindelhalter
- 22: Spindel
- 24: Elektromotor
- 26: Enstörungsplatine
- 26.1, 26.2: Bürstenhalter / Bürstenträger
- 26.3: Relais
- 26.4, 26.5: Gewindebuchse
- 26.6: Endschalter
- 26.7: Kabelstecker
- 26.8: Hallsensor
- 28,30: Distanzschrauben
- 32: Kommutator
- 34: Stößelstange
- 36: Gummikappe
- 38: Motorgehäuse
- 38.1: vorderer Motorgehäuseabschnitt
- 38.2: hinterer Motorgehäuseabschnitt
- 38.3: Lagereinsatz
- 40: Getriebegehäuse
- 40.1: Innenabsatz
- 42: Kabelstutzen
- 44: hinteres Wellenlager
- 46: Hubrohr
- 48: hinterer Gabelkopf
- 50: vorderer Gabelkopf

## Patentansprüche

1. Linearantrieb mit einem Getriebegehäuse (2), einem mit dem Getriebegehäuse (2) verbundenen und in einem Motorgehäuse (4) aufgenommenen und entstörten Elektromotor (24), der über einen in dem Motorgehäuse (4) aufgenommenen Rotor eine Welle (10) antreibt, die auf einem hinteren Wellenende in einem hinteren Wellenlager (44) gelagert ist und auf einem vorderen Wellenende gelagert ist, einem Kommutator (32) zur Stromübertragung auf den Rotor, elektrischen und/oder elektronischen Komponenten zur Entstörung des Elektromotors (24), wobei die Welle (10) mittels einer Schnecke (16) ein in dem Getriebegehäuse (2) angeordnetes Getriebe zum Verstellen eines in einem Führungsrohr (6) längsverschieblich geführten Hubrohrs (46) antreibt, wobei das hintere Wellenlager (44) in dem Motorgehäuse (4) gelagert ist, wobei das vordere Wellenlager (12) in dem Getriebegehäuse (2; 40) angeordnet bzw. gelagert ist, wobei die zur Entstörung des Elektromotors (24) erforderlichen elektrischen und/oder elektronischen Komponenten auf einer Entstörungsplatine (26) angeordnet sind, die zwischen dem vorderen Wellenlager (12) und dem Kommutator (32) angeordnet ist, wobei die Entstörungsplatine (26) in dem Getriebegehäuse (2) angeordnet ist, **DADURCH GEKENNZEICHNET DASS** das Motorgehäuse (4) einen als Stahlmantel ausgebildeten Motormantel aufweist, und dass die Entstörungsplatine (26) stirnseitig vor dem Motormantel sitzt, ihn kontaktiert und zusammen mit dem Stahlmantel einen Faradayschen Käfig ausbildet.

2. Linearantrieb nach Anspruch 1, **DADURCH GEKENNZEICHNET, DASS** die Entstörungsplatine (26) Kohlebürsten zum Anschluss an den Kommutator (32) umfasst.

3. Linearantrieb nach Anspruch 2, **DADURCH GEKENNZEICHNET, DASS** die Kohlebürsten auf einem Bürstenhalter angeordnet sind, der mit der Entstörungsplatine (26) verbindbar oder verbunden ist.

4. Linearantrieb nach einem der vorhergehenden Ansprüche, **DADURCH GEKENNZEICHNET, DASS** mindestens ein Endschalter (26,7) auf der Entstörungsplatine (26) angeordnet ist.

5. Linearantrieb nach einem der vorhergehenden Ansprüche, **DADURCH GEKENNZEICHNET, DASS** mindestens ein Relais (26.3) und/oder dass mindestens ein Hallsensor (26.8) auf der Entstörungsplatine (26) angeordnet ist.

6. Linearantrieb nach einem der vorhergehenden Ansprüche, **DADURCH GEKENNZEICHNET, DASS** das Motorgehäuse (4; 40) als tiefgezogener Stahlmantel ausgebildet ist.

7. Linearantrieb nach einem der vorhergehenden Ansprüche, **DADURCH GEKENNZEICHNET, DASS** das Motorgehäuse (4; 40) eine Lageraufnahme (4.3; 40.3) für das hintere Wellenlager (44) umfasst.

8. Linearantrieb nach Anspruch 7, **DADURCH GEKENNZEICHNET, DASS** die Lageraufnahme (4.3; 40.3) als herausragende Projektion mit einem reduzierten Außendurchmesser zur umschließenden Aufnahme bzw. Lagerung des hinteren Wellenlagers (44) ausgebildet ist.

9. Linearantrieb nach einem der vorhergehenden Ansprüche, **DADURCH GEKENNZEICHNET, DASS** das Motorgehäuse (4; 38) in das Getriebegehäuse (2; 40) eintaucht und dichtend mit diesem verbunden ist.

10. Linearantrieb nach Anspruch 9, **DADURCH GEKENNZEICHNET, DASS** das Motorgehäuse (4; 38) einen hinteren Gehäuseabschnitt (38.2) mit einem kleineren Außendurchmesser aufweist und dass sich an diesen hinteren Gehäuseabschnitt (38.2) mit einem Absatz ein vorderer Gehäuseabschnitt (38.1) anschließt, der gegenüber dem hinteren Gehäuseabschnitt (38.2) um 10 bis 20 Prozent vergrößert ist und der mit dem Getriebegehäuse (40) verbindbar ist.

11. Linearantrieb nach einem der vorhergehenden Ansprüche, **DADURCH GEKENNZEICHNET, DASS** die Entstörungsplatine (26) in dem Randbereich des Motorgehäuses (4) angeordnet ist und die Kontaktierung der Entstörungsplatine (26) unmittelbar oder über zwischenpositionierte Kontaktmittel mit dem Gehäuse erfolgt.

12. Linearantrieb nach einem der vorhergehenden Ansprüche, **DADURCH GEKENNZEICHNET, DASS** der Außendurchmesser der Entstörungsplatine (26) dem Außendurchmesser des Stahlmantels des Motorgehäuses (4) entspricht.

13. Linearantrieb nach einem der vorhergehenden Ansprüche, **DADURCH GEKENNZEICHNET, DASS** das Getriebegehäuse (2; 40) mehrere Gehäuseteile umfasst, welche lösbar miteinander verbindbar oder verbunden sind.

14. Linearantrieb nach einem der vorhergehenden Ansprüche, **DADURCH GEKENNZEICHNET, DASS** das Getriebe ein von der Schnecke (16) gekämmtes Schneckenrad (18) umfasst, das seinerseits drehfest mit einer Spindel (22) verbindbar ist.

15. Linearantrieb nach Anspruch 14, **DADURCH GEKENNZEICHNET, DASS** die Spindel (22) drehfest in einem Spindelhalter aufgenommen ist, der über eine Kupplung mit dem Schneckenrad (18) drehfest verbindbar ist,
und/oder
DASS auf der Spindel (22) eine mit dem Hubrohr (46) verbundene Spindelmutter (8) läuft, die drehfest und axial verstellbar in dem Führungsrohr (6) gehalten ist und entlang dessen Längsachse verstellbar ist.

## Claims

1. A linear drive comprising a transmission housing (2), an interference-suppressed electric motor (24) which is connected to the transmission housing (2) and is accommodated in a motor housing (4) and by way of a rotor accommodated in the motor housing (4) drives a shaft (10) which is mounted on a rear shaft end in a rear shaft bearing (44) and is mounted on a front shaft end, a commutator (32) for current transmission to the rotor, electrical and/or electronic components for interference suppression of the electric motor (24), wherein the shaft (10) by means of a worm (16) drives a transmission arranged in the transmission housing (2) for displacement of a lift tube (46) guided longitudinally displaceably in a guide tube (6), wherein the rear shaft bearing (44) is mounted in the motor housing (4), the front shaft bearing (12) is arranged or mounted in the transmission housing (2; 40) and the electrical and/or electronic components required for interference suppression of the electric motor (24) are arranged on an interference suppression circuit board (26) arranged between the front shaft bearing (12) and the commutator (32), wherein the interference suppression circuit board (26) is arranged in the transmission housing (2), **CHARACTERISED IN THAT** the motor housing (4) has a motor jacket formed as a steel jacket and that the interference suppression circuit board (26) is located at the front of the motor jacket, contacts the motor jacket and together with the steel jacket forms a Faraday cage.

2. A linear drive as set forth in claim 1 **CHARACTERISED IN THAT** the interference suppression circuit board (26) includes carbon brushes for connection to the commutator (32).

3. A linear drive as set forth in claim 2 **CHARACTERISED IN THAT** the carbon brushes are arranged on a brush holder which is or can be connected to the interference suppression circuit board (26).

4. A linear drive as set forth in one of the preceding claims **CHARACTERISED IN THAT** at least one limit switch (26.7) is arranged on the interference suppression circuit board (26).

5. A linear drive as set forth in one of the preceding claims **CHARACTERISED IN THAT** at least one relay (26.3) and/or at least one Hall sensor (26.8) is arranged on the interference suppression circuit board (26).

6. A linear drive as set forth in one of the preceding claims **CHARACTERISED IN THAT** the motor housing (4; 40) is in the form of a deep-drawn steel casing.

7. A linear drive as set forth in one of the preceding claims **CHARACTERISED IN THAT** the motor housing (4; 40) includes a bearing receiving means (4.3; 40.3) for the rear shaft bearing (44).

8. A linear drive as set forth in claim 7 **CHARACTERISED IN THAT** the bearing receiving means (4.3; 40.3) is in the form of a protruding projection of a reduced outside diameter for embracingly receiving or mounting the rear shaft bearing (44).

9. A linear drive as set forth in one of the preceding claims **CHARACTERISED IN THAT** the motor housing (4; 38) extends into the transmission housing (2; 40) and is sealingly connected thereto.

10. A linear drive as set forth in claim 9 **CHARACTERISED IN THAT** the motor housing (4; 38) has a rear housing portion (38.2) of a smaller outside diameter and that adjoining said rear housing portion (38.2) with a step is a front housing portion (38.1) which is enlarged in relation to the rear housing portion (38.2) by 10 to 20 percent and which can be connected to the transmission housing (40).

11. A linear drive as set forth in one of the preceding claims **CHARACTERISED IN THAT** the interference suppression circuit board (26) is arranged in the edge region of the motor housing (4) and that contacting of the interference suppression circuit board (26) with the housing takes place directly or via intermediate contact means.

12. A linear drive as set forth in one of the preceding claims **CHARACTERISED IN THAT** the outer diameter of the interference suppression circuit board (26) corresponds to the outer diameter of the steel jacket of the motor housing (4).

13. A linear drive as set forth in one of the preceding claims **CHARACTERISED IN THAT** the transmission housing (2; 40) comprises several housing parts which are or can be releasably connected to each other.

14. A linear drive as set forth in one of the preceding claims **CHARACTERISED IN THAT** the transmission includes a worm gear (18) which meshes with the worm (16) and which in turn can be non-rotatably connected to a spindle (22).

15. A linear drive as set forth in claim 14 **CHARACTERISED IN THAT** the spindle (22) is non-rotatably received in a spindle holder which can be non-rotatably connected to the worm gear (18) by way of a clutch
and/or
THAT running on the spindle (22) is a spindle nut (8) which is connected to the lift tube (46) and which is held non-rotatably and axially displaceably in the guide tube (6) and is displaceable along the longitudinal axis thereof.

## Revendications

1. Entraînement linéaire comprenant un carter de transmission (2), un moteur électrique à suppression d'interférences (24) qui est relié au carter de transmission (2) et logé dans un carter de moteur (4) et qui, par l'intermédiaire d'un rotor logé dans le carter de moteur (4), entraîne un arbre (10) qui est monté sur une extrémité arrière de l'arbre dans un palier arrière d'arbre (44) et est monté sur une extrémité avant de l'arbre, un commutateur (32) pour la transmission du courant au rotor, des composants électriques et/ou électroniques pour la suppression des interférences du moteur électrique (24), dans lequel l'arbre (10) entraîne, au moyen d'une vis sans fin (16), une transmission disposée dans le carter de transmission (2) pour le déplacement d'un tube de levage (46) guidé de manière longitudinalement déplaçable dans un tube de guidage (6), le palier arrière (44) de l'arbre étant monté dans le carter du moteur (4), le palier avant (12) de l'arbre étant disposé ou monté dans le carter de transmission (2; 40) et les composants électriques et/ou électroniques nécessaires à la suppression des interférences du moteur électrique (24) sont disposés sur une carte de circuit imprimé de suppression des interférences (26) disposée entre le palier d'arbre avant (12) et le commutateur (32), la carte de circuit imprimé de suppression des interférences (26) étant disposée dans le carter de transmission (2), **CARACTÉRISÉ EN CE QUE** le carter du moteur (4) comporte une enveloppe de moteur formée comme une enveloppe en acier et **en ce que** la carte de circuit imprimé de suppression des interférences (26) est située à l'avant de l'enveloppe du moteur, est en contact avec l'enveloppe du moteur et forme avec l'enveloppe en acier une cage de Faraday.

2. Entraînement linéaire selon la revendication 1, **CARACTÉRISÉ EN CE QUE** la carte de circuit imprimé de suppression des interférences (26) comprend des balais de charbon pour la connexion au commutateur (32).

3. Entraînement linéaire selon la revendication 2, **CARACTÉRISÉ EN CE QUE** les balais de charbon sont disposés sur un porte-balais qui est ou peut être connecté à la carte de circuit imprimé de suppression des interférences (26).

4. Entraînement linéaire selon l'une des revendications précédentes, **CARACTÉRISÉ EN CE QU'**au moins un interrupteur de fin de course (26.7) est disposé sur la carte de circuit imprimé de suppression d'interférences (26).

5. Entraînement linéaire selon l'une des revendications précédentes, **CARACTÉRISÉ EN CE QU'**au moins un relais (26.3) et/ou au moins un capteur à effet Hall (26.8) est disposé sur la carte de circuit imprimé de suppression des interférences (26).

6. Entraînement linéaire selon l'une des revendications précédentes, **CARACTÉRISÉ EN CE QUE** le carter de moteur (4; 40) se présente sous la forme d'un carter en acier embouti.

7. Entraînement linéaire selon l'une des revendications précédentes, **CARACTÉRISÉ EN CE QUE** le carter de moteur (4; 40) comprend un moyen de réception de palier (4.3; 40.3) pour le palier arrière de l'arbre (44).

8. Entraînement linéaire selon la revendication 7, **CARACTÉRISÉ EN CE QUE** le moyen de réception de palier (4.3; 40.3) se présente sous la forme d'une saillie dépassante ayant un diamètre extérieur réduit pour recevoir ou monter le palier d'arbre arrière (44) par embrassement.

9. Entraînement linéaire selon l'une des revendications précédentes, **CARACTÉRISÉ EN CE QUE** le carter de moteur (4; 38) s'étend dans le carter de transmission (2; 40) et est relié de manière étanche à celui-ci.

10. Entraînement linéaire selon la revendication 9, **CARACTÉRISÉ EN CE QUE** le carter de moteur (4; 38) comporte une partie arrière (38.2) de diamètre extérieur plus petit et qu'à côté de ladite partie arrière (38.2) avec un gradin se trouve une partie avant (38.1) qui est agrandie de 10 à 20 % par rapport à la partie arrière (38.2) et qui peut être reliée au carter de transmission (40).

11. Entraînement linéaire selon l'une des revendications précédentes, **CARACTÉRISÉ EN CE QUE** la carte de circuit imprimé de suppression des interférences (26) est disposée dans la zone du bord du carter de moteur (4) et **en ce que** le contact entre la carte de circuit imprimé de suppression des interférences (26) et le carter s'effectue directement ou par l'intermédiaire de moyens de contact intermédiaires.

12. Entraînement linéaire selon l'une des revendications précédentes, **CARACTÉRISÉ EN CE QUE** le diamètre extérieur de la carte de circuit imprimé suppression des interférences (26) correspond au diamètre extérieur de l'enveloppe en acier du carter de moteur (4).

13. Entraînement linéaire selon l'une des revendications précédentes, **CARACTÉRISÉ EN CE QUE** le carter de transmission (2; 40) comprend plusieurs parties de carter qui sont ou peuvent être reliées entre elles de manière amovible.

14. Entraînement linéaire selon l'une des revendications précédentes, **CARACTÉRISÉ EN CE QUE** la transmission comprend un engrenage à vis sans fin (18) qui s'engrène avec la vis sans fin (16) et qui, à son tour, peut être relié de manière non rotative à une broche (22).

15. Entraînement linéaire selon la revendication 14, **CARACTÉRISÉ EN CE QUE** la broche (22) est logée de manière non rotative dans un support de broche qui peut être relié de manière non rotative à l'engrenage à vis sans fin (18) au moyen d'un embrayage et/ou
**EN CE QUE** sur la broche (22) se trouve un écrou de broche (8) qui est relié au tube de levage (46) et qui est maintenu de manière non rotative et axialement déplaçable dans le tube de guidage (6) et est déplaçable le long de l'axe longitudinal de celui-ci.
